# EUROPEAN PATENT SPECIFICATION

(11) **EP 4 343 150 B1**
(45) Date of publication and mention of the grant of the patent: **11.11.2026**
(21) Application number: 22804115.8
(22) Date of filing: 18.05.2022
(51) Int. Cl.: F03D 80/00, F21S 2/00, F21S 4/20, F21V 23/06, F21V 33/00

(54) **INTERNAL LIGHTING SYSTEM FOR WIND TURBINES**
INTERNES BELEUCHTUNGSSYSTEM FÜR WINDTURBINEN
SYSTÈME D'ÉCLAIRAGE INTÉRIEUR D'AÉROGÉNÉRATEURS

(30) Priority: 20.05.2021 ES 202131034 U
(43) Date of publication of application: 27.03.2024
(73) Proprietor: IED Greenpower, S.L., 31195 Aizoain (ES)
(72) Inventor: ZABALA LÓPEZ, Josu, 31195 Aizoain (ES); FERNÁNDEZ ZUNZARREN, Andrés, 31195 Aizoain (ES)
(74) Representative: Veiga Serrano, Mikel
(86) International application number: PCT/ES2022/070305
(87) International publication number: WO 2022/243592

(56) References cited:
- CN-A- 109 737 011
- DE-A1- 102015 013 027
- DE-U1- 20 217 519
- ES-A1- 2 724 773
- US-A1- 2011 039 432
- US-A1- 2012 314 416
- US-A1- 2013 034 450
- US-A1- 2015 292 263

## Description

### TECHNICAL SECTOR

The present invention relates to an internal lighting system for wind turbines. Prior art is disclosed, for example, in DE 202 17 519 U1.

The purpose of the invention is to offer a distributed, efficient and robust lighting system that guarantees the correct illumination of the entire wind turbine both in service and in emergency, minimizing the risks to which people carrying out maintenance work inside it are subjected.

In order to achieve efficient and homogeneous lighting throughout the tower, the aim is to develop a luminaire distributed along a series of modules, which are materialized in flights of ladder that extend along the entire length of the ladder that provides access from the base of the wind turbine to the nacelle.

The aim is to achieve uniform and constant lighting along the entire ladder route, with a significantly lower energy consumption than the devices currently used for this application, simplifying and reducing the cost of installation.

Therefore, the purpose of the invention to guarantee correct visibility both during the maintenance operations carried out on the wind turbine and during evacuation operations in the event of an emergency.

### BACKGROUND TO THE INVENTION

Wind turbines installed in wind farms require maintenance and repair work for their correct operation and to extend their useful life as much as possible.

In order to carry out these tasks, the environment must be suitable for the needs of the operators who works in it. One of the critical aspects is the lighting of the work and transit areas. The interior of the wind turbines is artificially illuminated, so it is entirely dependent on the technology and the luminaires chosen. The lighting system is considered as a safety system because, in addition to providing suitable conditions for operation and maintenance, it must also provide safe conditions for evacuation of the machine in the event of an emergency. This makes that it has its own entity and must be considered as a system with minimal interfaces to other subsystems that may affect its operation.

More specifically, the lighting systems used to date present a wide and varied range of problems, including the following aspects:
- High electricity consumption.
- Low efficiency.
- Bulky equipment installed in areas where space is limited.
- Poor lighting quality.
- Complicated systems to install.
- These are systems involving individual luminaires that are located at certain points in order to illuminate the parts of the wind turbine where workers may be present. In the case of the tower, these areas are fundamentally the evacuation ladder.

### EXPLANATION OF THE INVENTION

The present invention relates to an internal lighting system for wind turbines, as defined in claim 1.

The recommended lighting system for the interior of wind turbines solves the above-mentioned problem in a fully satisfactory manner, based on a highly efficient solution.

For this purpose, the invention proposes a new concept of distributed lighting that aims to bring the light source to the point to be illuminated. In this way, the area to be illuminated is illuminated from a point at a very short distance, which makes it possible to achieve the required values with low luminous intensities.

The technical basis of this new concept is based on the better electrical conductivity through guided media than the propagation of light through air. While when transporting electrical energy via cables or copper tracks, losses can be quantified and limited with the correct dimensioning of the conductors and electrical voltages, light propagation through air is not modulable, it is not possible to act on the medium, only on the form or mode of emission. In addition to not being modulable, the propagation of light through air presents losses that increase exponentially with distance.

In addition to being a more efficient technology, distributed lighting offers higher quality and more homogeneous illumination along the entire illuminated area.

Therefore, the aim is to distribute the light along the entire length of the wind turbine tower in a simple way.

The modules materialize in ladder sections, so that each ladder section has an LED strip incorporated along one of its vertical profiles and at both ends there are connectors that allow the interconnection between the different sections and the power supply box.

The boxes with the control electronics and the battery are on the various platforms that cut the tower into sections.

From these platforms the sections covering half the distance to the upper and lower platform are fed and controlled.

The luminaire control electronics are external to the luminaire itself and common to several sections.

Sharing the driver, the voltage source and the battery for ten or more lighting ladder sections leads to a significant reduction of materials in the installation, and also enables a better dimensioning of the electronics and the battery for a more efficient operation.

From the point of view of safety in maintenance work and risk prevention for operators, the fact of dividing the lighting of the sections into two halves, up and down, from each platform, instead of lighting a whole section from each platform, increases the safety of the tower in the event of a lighting failure. The unlit distance to the platform in the event of individual failure of a group of luminaires controlled by the same electronics is halved.

The following advantages can be derived from this structuring:
- To reduce the electricity consumption by 50% compared to the luminaires currently used.
- To improve the efficiency and resizing of many elements that are part of it, with the consequent cost reductions.
- To increase the level of perceived comfort thanks to optimally distributed, homogeneous lighting throughout the tower and more than 10 lux at all measurement points.
- To comply with the specific technical requirements of the sector without modifying the constructive requirements.
- To simplify the integration and installation of the luminaire on the wind turbine, reducing the total installation time of the lighting system by 50%.
- Reduction in the number of components to be installed in the construction of the tower. It does not require its own structure, but uses the wind turbine ladder, which is an element that already exists in the wind turbine.
- Reduction of the carbon footprint. As mentioned above, the increase in luminous efficiency entails a notable reduction in the power to be installed, which means savings in dissipation elements and a reduction in electronics and batteries, which is expected to reduce the environmental footprint of the product compared to the current ones.

### DESCRIPTION OF THE DRAWINGS

In order to complement the description to be given below and in order to help a better understanding of the characteristics of the invention, in accordance with a preferential example of practical implementation of the same, a set of drawings is attached as an integral part of this description, in which the following is shown for illustrative and nonlimiting purposes:
Figure 1.- Shows a front elevation view of a module materialized in a flight of ladder that participates in an interior lighting system for generators made in accordance with the object of the present invention.
Figure 2.- Shows a profile view of the assembly of the previous figure, in which a detail of the ladder at the level of the access window to the electrical connections between flights of ladder is enlarged.
Figure 3.- Shows a perspective detail of the profile of a flight of ladder at the level of one of its ends.
Figure 4.- Shows a perspective detail of the electrical connection means between the ends of two flights of ladder.
Figure 5.- Shows a perspective view of the ladder at the level of the connection area of two of its sections, a connection that appears without the corresponding protective cover.
Figure 6.- Shows a view similar to that of figure 5, but in which the connection is covered by the corresponding protective cover.
Figure 7.- Shows a perspective view of the lighting system of the invention at the level of its electrical power box.
Figure 8 shows an enlarged detail of the connection of the electrical power box to the electrical installation of the ladder.

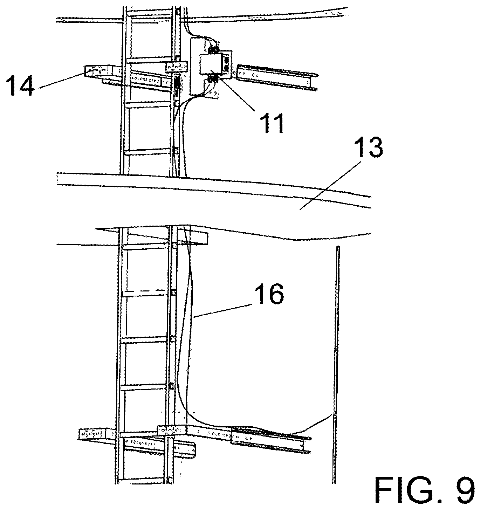

Figure 9 - Shows, finally, a perspective view of the lighting system of the invention according to the second variant of realisation of the same, at the level of its electrical power box.

### PREFERRED EMBODIMENT OF THE INVENTION

In view of the figures shown, it can be seen that the lighting system is based on the participation of a plurality of modules that can be coupled together, so that these modules materialize in sections of ladder (1).

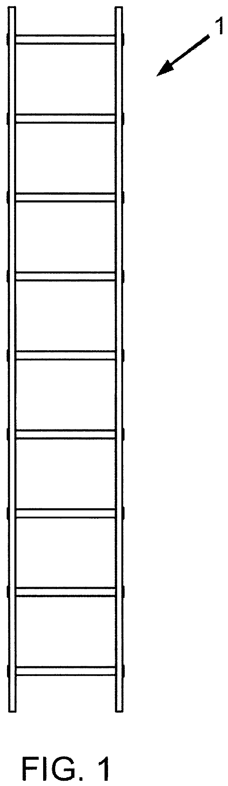

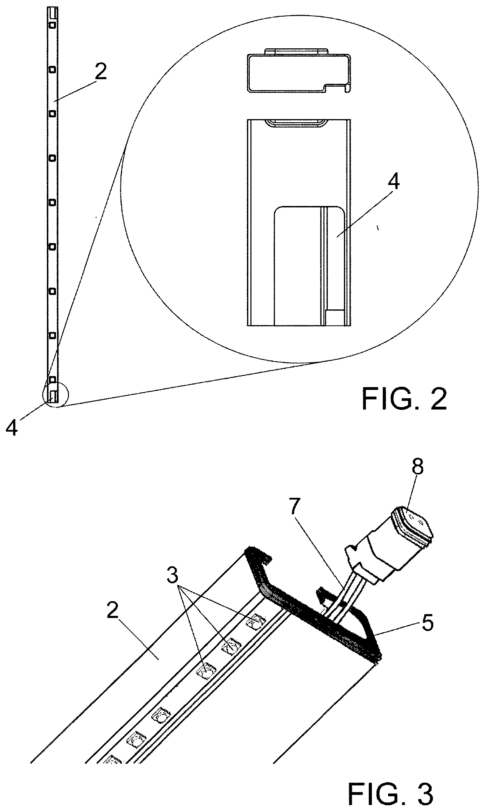

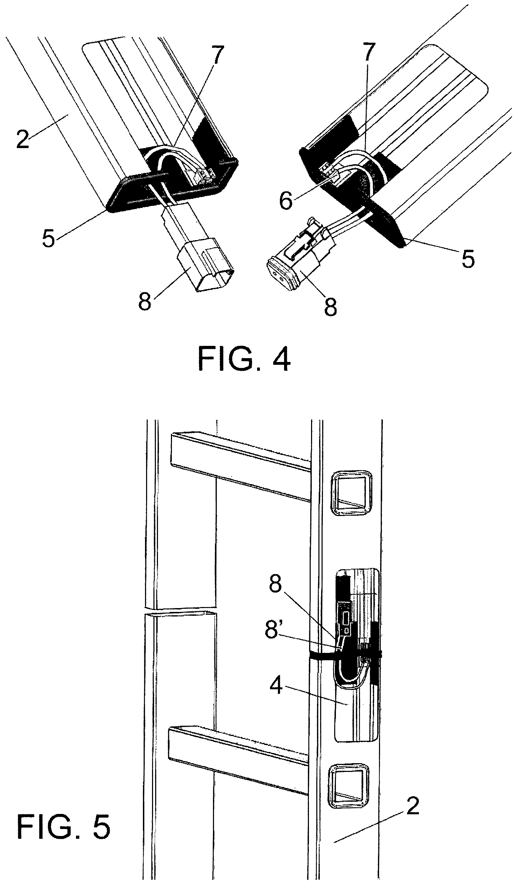

According to the example shown in figures 1 to 8, the modules are embodied in sections of the internal ladder (1) of the wind turbine in question, a ladder made up of multiple sections of the order of 2,5 meters each.

More specifically, the lighting system is integrated along one of the vertical profiles (2) of the ladder (1), taking the form of an LED strip (3), which is installed in a longitudinally extruded channel on said profile, LED strip (3) with LEDs at its ends, and internally to the metal profile of the ladder, power supply cables (7) to which are connected through internal connections (6) cables that end in a connector (8-8' ), which is accessible through a window (4) at both ends of the said profile.

These profiles are finished off with plastic or rubber plugs (5), open at the bottom, which fit by pressure coupling on the free edge of each profile, so that the windows (4) of one and the other profile face each other in the coupling between flights of ladder, defining a window of double width, through which the connectors (8-8' ) are accessible to link and unlink each other when necessary, giving electrical continuity to the installation.

To ensure the stability of the connectors (8-8'), at least one of them is provided with a magnet for attachment to a complementary magnet fixed to the inner face of the complementary vertical profile (2).

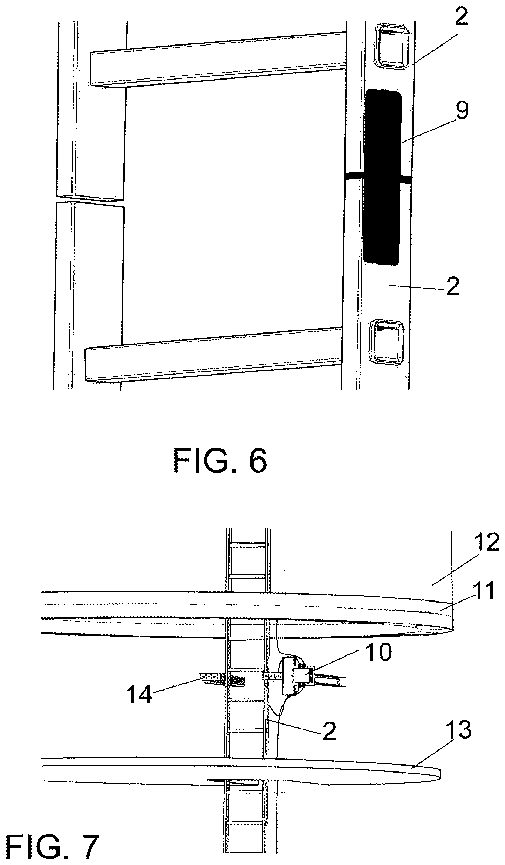

Figure 6 shows how, once the two flights of ladder have been connected, the access window to these connections is closed by means of a cover (9), leaving the electronics perfectly isolated.

The ladder shall be fixed to the tower in the same way as a standard ladder is fixed, being linked to the different sections (12) of the tower through the corresponding fixing means (14), not necessarily coinciding with the joining flanges (11) between sections of the tower.

This ladder will pass through the classic openings in the platforms (13) inside the tower, so that the control electronics will be located in at least one box (10) with an internal emergency battery, at the level of the different platforms (13) that cut the tower into sections, normally of 25 meters.

From these platforms (13) the sections covering half the distance to the upper and lower platform, typically 12.5 meters up and down, are fed and controlled.

The power supply box (10) is therefore installed at the mid-height of the assembly formed by all the flights of ladder or lighting profiles that it supplies electrically.

The control electronics for 25 meters of luminaire is external to the luminaire itself and common for several sections.

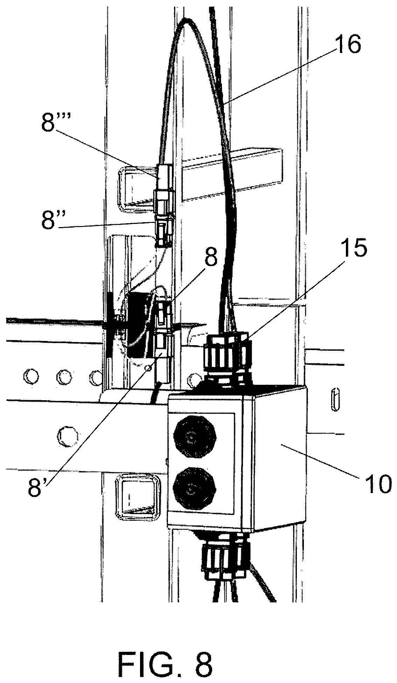

As can be seen in figure 8, the boxes (10) will have cables (16) emerging through cable glands (15) and ending in a connector (8"') similar to those used to electrically connect the flights of ladder, and with this the connection is made to the flight of ladder by means of the complementary connector (8").

As mentioned above, sharing the driver, the voltage source and the battery for ten or more luminaire sections leads to a significant reduction of materials in the installation, and also enables better sizing of the electronics and the battery for more efficient operation.

## Claims

1. Internal lighting system for wind turbines, wherein the internal lighting system consists of a series of LED strips (3) that are integrated into vertical profiles (2) of flights of a ladder (1) for use within an internal structure of the wind turbine, in such a way that for several flights of ladder an external power supply box (10) common to all these flights is established, in which there is a driver, a voltage source and an emergency battery, connectable to the flights of ladder by means of complementary connectors (8"-8‴).

2. Internal lighting system for wind turbines, according to claim 1, **characterized by** the fact that each LED strip (3) has power cables (7) at both ends and internally to the metal profile of the ladder, to which they are connected through internal connections (6), wherein the power cables (7) end in a connector (8-8'), accessible through a window (4) at both ends of the vertical profiles (2).

3. Internal lighting system for wind turbines, according to claims 1 and 2, **characterized by** the fact that the power supply box (10) is installed halfway up the assembly formed by all the flights of ladder that it supplies electrically.

4. Internal lighting system for wind turbines, according to claims 1 and 2, **characterized by** the fact that the vertical profiles (2) include a longitudinal extruded channel in which the LED strip (3) is implanted.

5. Internal lighting system for wind turbines, according to claims 1 and 4, **characterized by** the fact that the vertical profiles (2) are finished off with plastic or rubber plugs (5), open at the bottom, which fit by pressure coupling on the free edge of each profile; having foreseen that the gap formed by the windows (4) of one and the other profile face each other in the coupling between flights of ladder, defining a window of double width, which can be sealed by means of a cover (9).

6. Internal lighting system for wind turbines, according to claims 1 and 2, **characterized in that** at least one of the connectors (8-8') includes a magnet for attachment to a complementary magnet fixed to the inner face of a complementary vertical profile (2).

7. Internal lighting system for wind turbines, according to claims 1 and 2, **characterized by** the fact that said power supply box (10) is provided for each at least 10 flights of ladder.

## Patentansprüche

1. Internes Beleuchtungssystem für Windturbinen, wobei das interne Beleuchtungssystem aus einer Reihe von LED-Streifen (3) besteht, die in vertikale Profile (2) von Leiterläufen (1) zur Verwendung innerhalb einer inneren Struktur der Windturbine integriert ist, und zwar derart, dass für mehrere Leiterläufe ein für alle diese Leiterläufe gemeinsamer externer Stromversorgungskasten (10) festgelegt wird, in dem sich ein Treiber, eine Spannungsquelle und eine Notstrombatterie befinden, die mittels komplementärer Steckverbinder (8"-8‴) an die Leiterläufe anschließbar ist.

2. Internes Beleuchtungssystem für Windturbinen gemäß Anspruch 1, **dadurch gekennzeichnet, dass** jeder LED-Streifen (3) an beiden Enden und im Inneren des Metallprofils der Leiter Stromkabel (7) aufweist, mit denen er über interne Verbindungen (6) verbunden ist, wobei die Stromkabel (7) in einem Steckverbinder (8-8') enden, der über ein Fenster (4) an beiden Enden der vertikalen Profile (2) zugänglich ist.

3. Internes Beleuchtungssystem für Windturbinen gemäß den Ansprüchen 1 und 2, **dadurch gekennzeichnet, dass** der Stromversorgungskasten (10) auf halber Höhe der Baugruppe angebracht ist, die aus allen von ihm elektrisch versorgten Leiterläufen besteht.

4. Internes Beleuchtungssystem für Windturbinen gemäß den Ansprüchen 1 und 2, **dadurch gekennzeichnet, dass** die vertikalen Profile (2) einen längs verlaufenden extrudierten Kanal beinhalten, in den der LED-Streifen (3) eingesetzt wird.

5. Internes Beleuchtungssystem für Windturbinen gemäß den Ansprüchen 1 und 4, **dadurch gekennzeichnet, dass** die vertikalen Profile (2) mit unten offenen Kunststoff- oder Gummistopfen (5) abgeschlossen sind, die durch Druckkupplung in den freien Rand jedes Profils eingreifen; wobei vorgesehen ist, dass die durch die Fenster (4) des einen und des anderen Profils gebildete Lücke in der Kupplung zwischen den Leiterläufen einander gegenüberliegen und ein Fenster doppelter Breite bilden, das mittels einer Abdeckung (9) verschlossen werden kann.

6. Internes Beleuchtungssystem für Windturbinen gemäß den Ansprüchen 1 und 2, **dadurch gekennzeichnet, dass** mindestens einer der Steckverbinder (8-8') einen Magneten zur Befestigung an einem komplementären Magneten beinhaltet, der an der Innenseite eines komplementären vertikalen Profils (2) befestigt ist.

7. Internes Beleuchtungssystem für Windturbinen gemäß den Ansprüchen 1 und 2, **dadurch gekennzeichnet, dass** der Stromversorgungskasten (10) für jeweils mindestens 10 Leiterläufen vorgesehen ist.

## Revendications

1. Système d'éclairage interne pour éoliennes, dans lequel le système d'éclairage interne se compose d'une série de bandes LED (3) qui sont intégrées dans des profilés verticaux (2) de volées d'une échelle (1) destinées à être utilisées à l'intérieur d'une structure interne de l'éolienne, de telle sorte que, pour plusieurs volées d'échelle, un boîtier d'alimentation externe (10) commun à toutes ces volées est installé, dans lequel se trouvent un pilote, une source de tension et une batterie de secours, pouvant être raccordés aux volées d'échelle au moyen de connecteurs complémentaires (8"-8"').

2. Système d'éclairage interne pour éoliennes, selon la revendication 1, **caractérisé par le fait que** chaque bande LED (3) a des câbles d'alimentation (7) au niveau des deux extrémités et à l'intérieur du profilé métallique de l'échelle, à laquelle ils sont raccordés par des connexions internes (6), dans lequel les câbles d'alimentation (7) se terminent par un connecteur (8-8'), accessible par une fenêtre (4) au niveau deux extrémités des profilés verticaux (2).

3. Système d'éclairage interne pour éoliennes, selon les revendications 1 et 2, **caractérisé par le fait que** le boîtier d'alimentation (10) est installé à mi-hauteur de l'ensemble formé par toutes les volées d'échelle qu'il alimente électriquement.

4. Système d'éclairage interne pour éoliennes, selon les revendications 1 et 2, **caractérisé par le fait que** les profilés verticaux (2) comprennent un canal extrudé longitudinal dans lequel la bande LED (3) est implantée.

5. Système d'éclairage interne pour éoliennes, selon les revendications 1 et 4, **caractérisé par le fait que** les profilés verticaux (2) se terminent par des bouchons en plastique ou en caoutchouc (5), ouverts au fond, qui s'emboîtent par accouplement par pression sur le bord libre de chaque profilé ; étant prévu que l'espace formé par les fenêtres (4) de l'un et de l'autre profilé se font face lors de l'accouplement entre les volées d'échelle, définissant une fenêtre de double largeur, qui peut être obturée au moyen d'un couvercle (9).

6. Système d'éclairage interne pour éoliennes, selon les revendications 1 et 2, **caractérisé en ce qu'**au moins l'un des connecteurs (8-8') comprend un aimant pour un assemblage à un aimant complémentaire fixé sur la face interne d'un profilé vertical (2) complémentaire.

7. Système d'éclairage interne pour éoliennes, selon les revendications 1 et 2, **caractérisé par le fait que** ledit boîtier d'alimentation (10) est prévu pour chacune des au moins 10 volées d'échelle.
